# EUROPEAN PATENT APPLICATION

(11) **EP 4 344 041 A1**
(43) Date of publication of application: **27.03.2024**
(21) Application number: 23194227.7
(22) Date of filing: 30.08.2023
(51) Int. Cl.: H02M 3/158, H02M 1/00

(54) **VOLTAGE CONVERTER, CONTROL METHOD THEREOF, BATTERY MODULE, ELECTRONIC DEVICE, AND CHARGING CABINET**

(30) Priority: 21.09.2022 CN 202211153995
(71) Applicant: Huawei Digital Power Technologies Co., Ltd., Shenzhen, Guangdong 518043 (CN)
(72) Inventor: DU, Changlei, Shenzhen, 518043 (CN); LI, Wenguang, Shenzhen, 518043 (CN); CAI, Yi, Shenzhen, 518043 (CN)
(74) Representative: Gill Jennings & Every LLP

(57) **Abstract**

This application discloses a voltage converter, a control method thereof, a battery module, an electronic device, and a charging cabinet. The voltage converter includes a buck-boost circuit and a sampling control circuit. If a voltage of a voltage input end is less than a voltage of a voltage output end and a load current is greater than or equal to a current threshold, the sampling control circuit controls a first switch of the buck-boost circuit to be on and a second switch to be off, controls a fourth switch to be on in a first time segment and to be off in a second time segment, and enables a turn-on time of a third switch in one or more switching periods to increase. If the voltage of the voltage input end is less than the voltage of the voltage output end and the load current is less than the current threshold, the sampling control circuit controls the first switch to be on and the second switch to be off, controls the fourth switch to be on in the first time segment and to be off in the second time segment, and enable the turn-on time of the third switch in the one or more switching periods to decrease This application can improve efficiency, and avoid an output voltage fluctuation in a mode switching process.

## Description

### TECHNICAL FIELD

This application relates to the field of power electronics, and in particular, to a voltage converter, a control method thereof, a battery module, an electronic device, and a charging cabinet.

### BACKGROUND

Buck-boost (buck-boost) circuits are common direct current to direct current voltage (current) conversion circuits, and are usually used in voltage converters in various types of power systems. Generally, the buck-boost circuit includes a plurality of switching transistors and an inductor A charge/discharge status of the inductor in the buck-boost circuit may be controlled by changing on or off of each switching transistor, to implement voltage conversion. In some application scenarios of the buck-boost circuit, the buck-boost circuit keeps working in a discontinuous conduction mode. However, in such scenarios, all four switching transistors of the buck-boost circuit are high-frequency switches, and losses of the switching transistors are extremely large. In some other scenarios, the buck-boost circuit keeps working in a continuous conduction mode. In such scenario, when the buck-boost circuit has a light load, a negative current of the buck-boost circuit is large, a turn-on loss and a switching loss are large, and working efficiency is low.

### SUMMARY

In view of this, this application provides a voltage converter, a voltage converter control method, a battery module, an electronic device, and a charging cabinet, to improve efficiency in a light-load mode and a heavy-load mode, reduce a voltage ripple, and avoid an output voltage fluctuation in a switching process of a control mode.

According to a first aspect, this application provides a voltage converter, configured to supply power to a load, and including a buck-boost circuit and a sampling control circuit. The buck-boost circuit includes a voltage input end, a voltage output end, a first switch, a second switch, a third switch, and a fourth switch. An input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end. The sampling control circuit is configured to sample a load current, and is further configured to: when an input voltage of the voltage input end is less than an output voltage of the voltage output end and the load current is greater than or equal to a current threshold, control the first switch to be on and the second switch to be off, control the fourth switch to be on in a first time segment and to be off in a second time segment, and enable a turn-on time of the third switch in one or more switching periods to increase; or when the input voltage of the voltage input end is less than the output voltage of the voltage output end and the load current is less than the current threshold, control the first switch to be on and the second switch to be off, control the fourth switch to be on in the first time segment and to be off in the second time segment, and enable the turn-on time of the third switch in the one or more switching periods to decrease. According to this embodiment of this application, efficiency in the light-load mode and the heavy-load mode can be improved, a voltage ripple can be reduced, and an output voltage fluctuation in the switching process of the control mode can be avoided.

In an optional implementation, the sampling control circuit is further configured to: when the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase. Based on such a design, efficiency can be improved, and an output voltage fluctuation in the switching process of the control mode can be avoided, without the need of an additional hardware circuit, thereby reducing costs.

In an optional implementation, the sampling control circuit is further configured to: when the input voltage of the voltage input end is greater than the output voltage of the voltage output end and the load current is less than the current threshold, control either of the first switch and the second switch to be on, control the fourth switch to be off, and enable the turn-on time of the third switch in the one or more switching periods to decrease. In this way, an output voltage fluctuation in the switching process of the control mode can be avoided.

In an optional implementation, the sampling control circuit is further configured to: when the input voltage of the voltage input end is greater than the output voltage of the voltage output end and the load current is greater than or equal to the current threshold, control the first switch to be on in the first time segment and to be off in the second time segment, control the third switch to be on and the fourth switch to be off, and enable a turn-on time of the second switch in the one or more switching periods to increase. In this way, efficiency can be improved, and an output voltage fluctuation in the switching process of the control mode can be avoided, without the need of an additional hardware circuit, thereby reducing costs.

In an optional implementation, the sampling control circuit is further configured to: when the input voltage of the voltage input end is greater than the output voltage of the voltage output end and the load current is less than the current threshold, control the first switch to be on in the first time segment and to be off in the second time segment, control the third switch to be on and the fourth switch to be off, and enable the turn-on time of the second switch in the one or more switching periods to decrease.

According to a second aspect, this application further provides a voltage converter control method. The control method may be applicable to the voltage converter, and the voltage converter includes a buck-boost circuit and a sampling control circuit. The buck-boost circuit may include a voltage input end, a voltage output end, a first switch, a second switch, a third switch, and a fourth switch. An input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end. The control method may include: sampling a load current; and when an input voltage of the voltage input end is less than an output voltage of the voltage output end and the load current is greater than or equal to a current threshold, controlling the first switch to be on and the second switch to be off, controlling the fourth switch to be on in a first time segment and to be off in a second time segment, and enabling a turn-on time of the third switch in one or more switching periods to increase; or when the input voltage of the voltage input end is less than the output voltage of the voltage output end and the load current is less than the current threshold, controlling the first switch to be on and the second switch to be off, controlling the fourth switch to be alternately turned on in each working period, and enable the turn-on time of the third switch in the one or more switching periods to decrease. According to this embodiment of this application, efficiency in the light-load mode and the heavy-load mode can be improved, a voltage ripple can be reduced, and an output voltage fluctuation in the switching process of the control mode can be avoided.

In an optional implementation, the control method further includes: when the input voltage of the voltage input end is greater than the output voltage of the voltage output end and the load current is greater than or equal to the current threshold, controlling either of the first switch and the second switch to be on, controlling the fourth switch to be off, and enabling the turn-on time of the third switch in the one or more switching periods to increase. In this way, efficiency can be improved, and an output voltage fluctuation in the switching process of the control mode can be avoided, without the need of addition of a hardware circuit.

In an optional implementation, the control method further includes: when the input voltage of the voltage input end is greater than the output voltage of the voltage output end and the load current is less than the current threshold, controlling either of the first switch and the second switch to be on, controlling the fourth switch to be off, and enabling the turn-on time of the third switch in the one or more switching periods to decrease. In this way, efficiency can be improved, and an output voltage fluctuation in the switching process of the control mode can be avoided, without the need of addition of a hardware circuit.

According to a third aspect, this application further provides a battery module. The battery module includes a cell unit and a voltage converter. The cell unit is configured to supply power to the voltage converter, and the voltage converter includes a buck-boost circuit and a sampling control circuit. The buck-boost circuit includes a voltage input end, a voltage output end, a first switch, a second switch, a third switch, and a fourth switch. An input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end. The sampling control circuit is configured to sample a load current. The sampling control circuit is further configured to: when an input voltage of the voltage input end is less than an output voltage of the voltage output end and the load current is greater than or equal to a current threshold, control the first switch to be on and the second switch to be off, control the fourth switch to be on in a first time segment and to be off in a second time segment, and enable a turn-on time of the third switch in one or more switching periods to increase; or when the input voltage of the voltage input end is less than the output voltage of the voltage output end and the load current is less than the current threshold, control the first switch to be on and the second switch to be off, control the fourth switch to be on in the first time segment and to be off in the second time segment, and enable the turn-on time of the third switch in the one or more switching periods to decrease. According to this embodiment of this application, efficiency in the light-load mode and the heavy-load mode can be improved, a voltage ripple can be reduced, and an output voltage fluctuation in the switching process of the control mode can be avoided.

In an optional implementation, the sampling control circuit is further configured to: when the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase. Based on such a design, efficiency can be improved, and an output voltage fluctuation in the switching process of the control mode can be avoided, without the need of an additional hardware circuit, thereby reducing costs.

In an optional implementation, the sampling control circuit is further configured to: when the input voltage of the voltage input end is greater than the output voltage of the voltage output end and the load current is less than the current threshold, control either of the first switch and the second switch to be on, control the fourth switch to be off, and enable the turn-on time of the third switch in the one or more switching periods to decrease. Based on such a design, efficiency can be improved, and an output voltage fluctuation in the switching process of the control mode can be avoided, without the need of an additional hardware circuit, thereby reducing costs.

According to a fourth aspect, this application further provides an electronic device, and including the foregoing battery module or the foregoing voltage converter.

According to a fifth aspect, this application further provides a charging cabinet. The charging cabinet includes a power module and the foregoing voltage converter, and the power module is configured to supply power to the voltage converter.

Embodiments of this application provide a voltage converter, a voltage converter control method, a battery module, an electronic device, and a charging cabinet, to improve efficiency in a light-load mode and a heavy-load mode, reduce a voltage ripple, and avoid an output voltage fluctuation in a switching process of a control mode.

### BRIEF DESCRIPTION OF DRAWINGS

FIG. 1 is a schematic diagram of an application environment of a voltage converter according to an embodiment of this application;
FIG. 2 is a schematic diagram of another application environment of a voltage converter according to an embodiment of this application;
FIG. 3 is a schematic diagram of a buck-boost circuit according to an embodiment of this application;
FIG. 4A is a diagram of switch timing when a voltage converter is in a boost mode and is in a heavy-load mode;
FIG. 4B to FIG. 4F are schematic diagrams when a voltage converter is in a boost mode and is in a heavy-load mode according to this application;
FIG. 5A is a diagram of switching timing when a voltage converter is in a buck mode and is in a heavy-load mode;
FIG. 5B to FIG. 5F are schematic diagrams when a voltage converter is in a buck mode and is in a heavy-load mode according to this application;
FIG. 6A is another diagram of switch timing when a voltage converter is in a buck mode and is in a heavy-load mode;
FIG. 6B to FIG. 6F are another schematic diagram when a voltage converter is in a buck mode and is in a heavy-load mode according to this application;
FIG. 7 is a flowchart of a voltage converter control method according to an embodiment of this application;
FIG. 8 is a schematic diagram of a structure of a battery module according to an embodiment of this application;
FIG. 9 is a diagram of an application scenario of a battery module according to an embodiment of this application;
FIG. 10 is a schematic diagram of a structure of an electronic device according to an embodiment of this application; and
FIG. 11 is a schematic diagram of a structure of a charging cabinet according to an embodiment of this application.

### DESCRIPTION OF EMBODIMENTS

It should be noted that when an element is considered to be "connected" to another element, the element may be directly connected to the another element or an element may further exist between them. When an element is considered to be "disposed" on another element, the element may be disposed directly on the another element or an element may exist between them.

Unless otherwise defined, all technical and scientific terms used in this specification have same meanings as those usually understood by a person skilled in the art of this application. The terms used in the specification of this application are merely for the purpose of describing specific embodiments, and are not intended to limit this application. The term " and/or" used in this specification includes any and all combinations of one or more related listed items.

A common voltage (current) conversion circuit of a buck-boost circuit may implement buck conversion or boost conversion, and therefore may be applied to a voltage converter in a power system. For example, a voltage converter may be a power electronic converter in a power management system of an electric vehicle/a hybrid vehicle, a battery management system (battery management system, BMS) in a photovoltaic power generation system, a direct current power distribution unit in a communication power supply system, or the like.

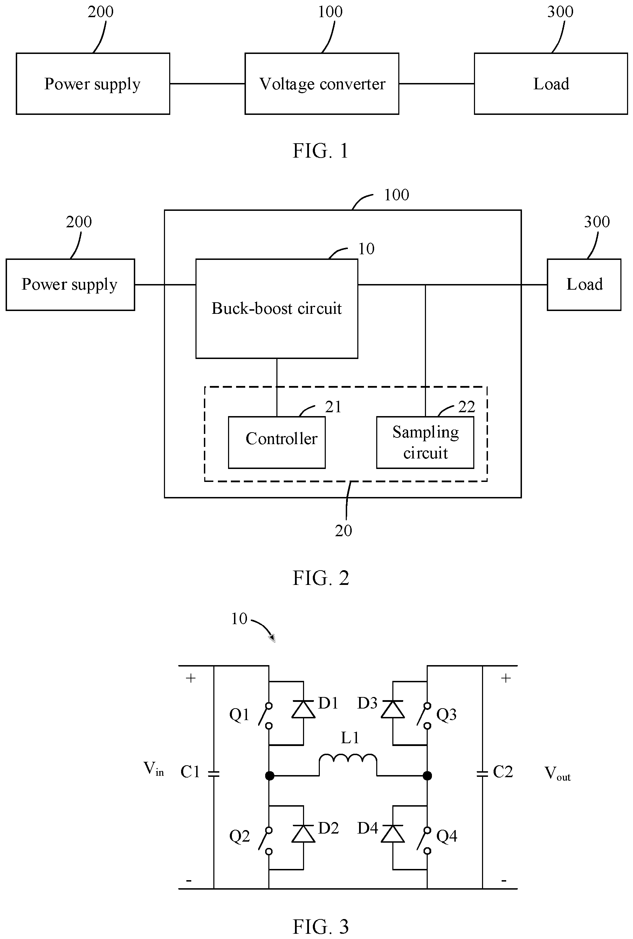

FIG. 1 is a schematic diagram of application of a voltage converter 100 according to an embodiment of this application.

As shown in FIG. 1, the voltage converter 100 may be electrically connected between a power supply 200 and a load 300. It may be understood that the voltage converter 100 may supply power to the load 300.

For example, in a scenario, the power supply 200 may be a power adapter, and the load 300 may be a battery. The voltage converter 100 may receive a first voltage output by the power adapter, and may convert the first voltage output by the power adapter into a second voltage, to charge the battery.

For example, in another scenario, the power supply 200 may be a battery, and the load may be an electric device, such as a notebook computer, a mobile phone, a digital camera, or a tablet computer. The voltage converter 100 may receive a first voltage output by the battery, and may convert the first voltage output by the battery into a second voltage, to supply power to an electric device such as a notebook computer, a mobile phone, a digital camera, or a tablet computer.

FIG. 2 is a schematic diagram of a voltage converter 100 according to an embodiment of this application.

In this embodiment, the voltage converter 100 may include a buck-boost circuit 10 and a sampling control circuit 20. The buck-boost circuit 10 is connected to the sampling control circuit 20. The buck-boost circuit 10 may include a plurality of controllable switches.

It may be understood that when the buck-boost circuit 10 performs buck conversion, an input voltage of the buck-boost circuit 10 is greater than an output voltage of the buck-boost circuit 10. When the buck-boost circuit 10 performs boost conversion, the input voltage of the buck-boost circuit 10 is less than the output voltage of the buck-boost circuit 10.

The sampling control circuit 20 may sample an electrical parameter of the load 300. For example, the sampling control circuit 20 may sample a load current. The sampling control circuit 20 may further control a plurality of switches in the buck-boost circuit 10 based on a sampled load current.

FIG. 3 is a schematic diagram of a voltage converter 100 according to another embodiment of this application.

In this embodiment, the buck-boost circuit 10 may include a voltage input end Vᵢₙ, a voltage output end Vₒᵤₜ, a switch Q1, a switch Q2, a switch Q3, a switch Q4, an inductor L1, a capacitor C1, and a capacitor C2.

It may be understood that, in an embodiment, the voltage input end Vᵢₙ may be electrically connected to the power supply 200, and the voltage output end Vₒᵤₜ may be electrically connected to the load 300.

In this embodiment, an input end of the switch Q 1 may be connected to a positive electrode of the voltage input end Vᵢₙ, an output end of the switch Q2 may be connected to a negative electrode of the voltage input end Vᵢₙ, an input end of the switch Q3 may be connected to a positive electrode of the voltage output end Vₒᵤₜ, and an output end of the switch Q4 may be connected to a negative electrode of the voltage output end Vₒᵤₜ.

As shown in FIG. 3, a first end of the switch Q1 may be connected to the sampling control circuit 20, a second end of the switch Q1 may be electrically connected to the positive electrode of the voltage input end Vᵢₙ and a first end of the capacitor C1, and a third end of the switch Q1 may be electrically connected to a second end of the switch Q2. The second end of the switch Q1 may be further electrically connected to a cathode of a diode D1, and the third end of the switch Q1 may be further electrically connected to an anode of the diode D1. The diode D1 is a parasitic diode of the switch Q1.

It may be understood that the sampling control circuit 20 may be electrically connected to the first end of the switch Q1 or may be connected to the first end of the switch Q1 by using signals, and the first end of the switch Q1 may be used as a control end of the switch Q1. In other words, the sampling control circuit 20 may output a signal to the first end of the switch Q1, to control a status of the switch Q1. For example, the sampling control circuit 20 may output a signal to the first end of the switch Q1, to control the switch Q1 to be on or off.

The first end of the switch Q2 may be connected to the sampling control circuit 20, the second end of the switch Q2 may be electrically connected to the third end of the switch Q1, and a third end of the switch Q2 may be electrically connected to the negative electrode of the voltage input end Vᵢₙ and a second end of the capacitor C1. The second end of the switch Q2 may be further electrically connected to a cathode of a diode D2, and the third end of the switch Q2 may be further electrically connected to an anode of the diode D2. The diode D2 is a parasitic diode of the switch Q2.

It may be understood that the sampling control circuit 20 may be electrically connected to the first end of the switch Q2 or may be connected to the first end of the switch Q2 by using signals, and the first end of the switch Q2 may be used as a control end of the switch Q2. In other words, the sampling control circuit 20 may output a signal to the first end of the switch Q2, to control a status of the switch Q2. For example, the sampling control circuit 20 may output a signal to the first end of the switch Q2, to control the switch Q2 to be on or off.

A first end of the switch Q3 may be connected to the sampling control circuit 20, a second end of the switch Q3 may be electrically connected to the positive electrode of the voltage output end Vₒᵤₜ and a first end of the capacitor C2, and a third end of the switch Q3 may be electrically connected to a second end of the switch Q4. The second end of the switch Q3 may be further electrically connected to a cathode of a diode D3, and the third end of the switch Q3 may be further electrically connected to an anode of the diode D3. The diode D3 is a parasitic diode of the switch Q3.

It may be understood that the sampling control circuit 20 may be electrically connected to the first end of the switch Q3 or may be connected to the first end of the switch Q3 by using signals, and the first end of the switch Q3 may be used as a control end of the switch Q3. In other words, the sampling control circuit 20 may output a signal to the first end of the switch Q3, to control a status of the switch Q3. For example, the sampling control circuit 20 may output a signal to the first end of the switch Q3, to control the switch Q3 to be on or off.

A first end of the switch Q4 may be connected to the sampling control circuit 20, the second end of the switch Q4 may be electrically connected to the third end of the switch Q3, and a third end of the switch Q4 may be electrically connected to the negative electrode of the voltage output end Vₒᵤₜ and a second end of the capacitor C2. The second end of the switch Q4 may be further electrically connected to a cathode of a diode D4, and the third end of the switch Q4 may be further electrically connected to an anode of the diode D4. The diode D4 is a parasitic diode of the switch Q4.

It may be understood that the sampling control circuit 20 may be electrically connected to the first end of the switch Q4 or may be connected to the first end of the switch Q4 by using signals, and the first end of the switch Q4 may be used as a control end of the switch Q4. In other words, the sampling control circuit 20 may output a signal to the first end of the switch Q4, to control a status of the switch Q4. For example, the sampling control circuit 20 may output a signal to the first end of the switch Q4, to control the switch Q4 to be on or off.

A first end of the inductor L1 may be electrically connected to a node between the third end of the switch Q1 and the second end of the switch Q2, and a second end of the inductor L1 may be electrically connected to a node between the third end of the switch Q3 and the second end of the switch Q4. It may be understood that the capacitor C1 may perform filtering on an input voltage of the buck-boost circuit 10, to reduce a ripple of the input voltage. The capacitor C2 may perform filtering on an output voltage of the buck-boost circuit 10, so that the buck-boost circuit 10 may further continuously output a stable output voltage.

In this embodiment of this application, the switch Q1, the switch Q2, the switch Q3, and the switch Q4 each may be any one of a metal-oxide semiconductor field-effect transistor (Metal-Oxide-Semiconductor Field-Effect Transistor, MOSFET), an insulated gate bipolar transistor (Insulated Gate Bipolar Transistor, IGBT), a thyristor, a bipolar power transistor (bipolar power transistor), or a wide band-gap semiconductor field-effect transistor.

It may be understood that, in some possible implementations, the sampling control circuit 20 may include a controller 21 and a sampling circuit 22.

The controller 21 may be a logic circuit that can generate a control signal. For example, the controller 21 may be a general-purpose central processing unit (central processing unit, CPU), a general-purpose processor, a digital signal processor (digital signal processor, DSP), an application-specific integrated circuit (application specific integrated circuits, ASIC), a field programmable gate array (field programmable gate array, FPGA), a microcontroller unit (microcontroller unit, MCU) or another programmable logic device, a transistor logic device, a hardware component, or any combination thereof.

In this embodiment, the sampling circuit 22 may be electrically connected to the controller 21. The sampling circuit 22 may be further electrically connected to an output end of the buck-boost circuit 10. In this way, the sampling circuit 22 may sample a load current and transmit the load current to the controller 21. The controller 21 may control a status of a switch in the buck-boost circuit 10 based on the sampled current.

The sampling control circuit 20 may control the switches Q1 to Q4 to be periodically turned on and turned off based on the voltage converter shown in FIG. 3, so that the buck-boost circuit 10 implements voltage conversion.

It may be understood that the buck-boost circuit 10 may work in a buck (buck) mode or a boost (boost) mode based on different application scenarios. For example, when the input voltage of the buck-boost circuit 10 is greater than the output voltage of the buck-boost circuit 10, the buck-boost circuit 10 works in the buck mode. When the input voltage of the buck-boost circuit 10 is less than the output voltage of the buck-boost circuit 10, the buck-boost circuit 10 works in the boost mode.

The following describes operating principles of this application with reference to a plurality of different application scenarios of the voltage converter 100.

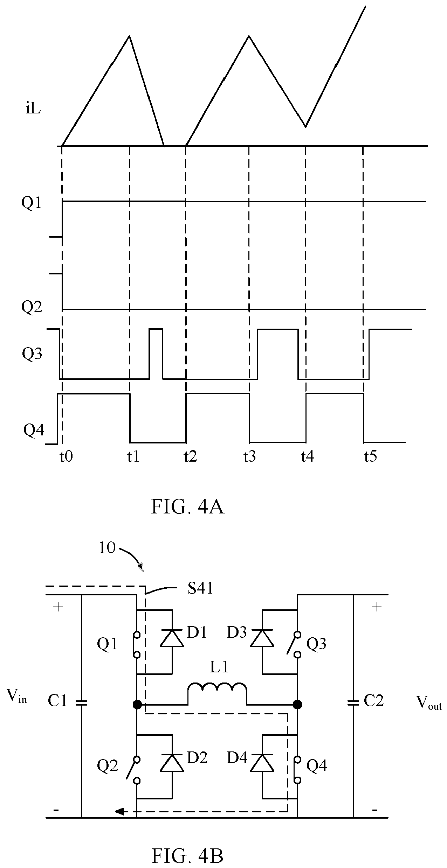

FIG. 4A is a diagram of switch timing in which a voltage converter 100 works in a boost mode and a load current changes from low to high.

Timing control of the switches Q1 to Q4 may be implemented with reference to Table 1.

**Table 1**

| Time segment | Switch Q1 | Switch Q2 | Switch Q3 | Switch Q4 |
|---|---|---|---|---|
| t0-t1 | On | Off | Off | On |
| t1-t2 | On | Off | Sometimes on | Off |
| t2-t3 | On | Off | Off | On |
| t3-t4 | On | Off | On | Off |
| t4-t5 | On | Off | Off | On |

In a time segment of t0 to t1, the controller 21 may control the switch Q1 and the switch Q4 to be on, and the switch Q2 and the switch Q3 to be off. In this case, a current of the power supply 200 may charge the inductor L1. A current path of the power supply 200 and the first inductor L1 is shown by line S41 in FIG. 4B.

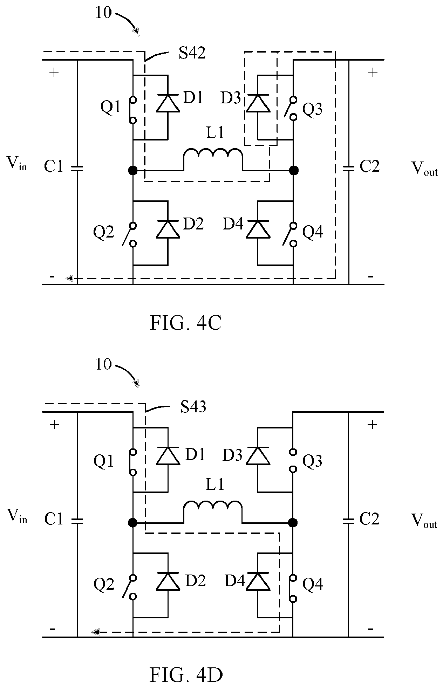

In a time segment of t1 to t2, the controller 21 may control the switch Q1 to be on, the switch Q3 to be sometimes on, and the switch Q2 and the switch Q4 to be off. In this case, the inductor L1 is charged. After the current of the power supply 200 may flow to the inductor L1, a part of the current flows to the switch Q3, and the other part of the current flows to a parasitic diode of the switch Q3, to supply power to the load 300. In this case, the buck-boost circuit 10 may work in a discontinuous conduction mode (Discontinuous Conduction Mode, DCM). The DCM may mean that an inductor current keeps 0 in one switching period, which means that an inductor is properly reset. That is, when a switching transistor is on, the inductor current is 0. A current path of the power supply 200 and the first inductor L1 is shown by line S42 in FIG. 4C.

In a time segment of t2 to t3, the controller 21 may control the switch Q1 and the switch Q4 to be on, and the switch Q2 and the switch Q3 to be off. In this case, the current of the power supply 200 may charge the inductor L1. A current path of the power supply 200 and the first inductor L1 is shown by line S43 in FIG. 4D.

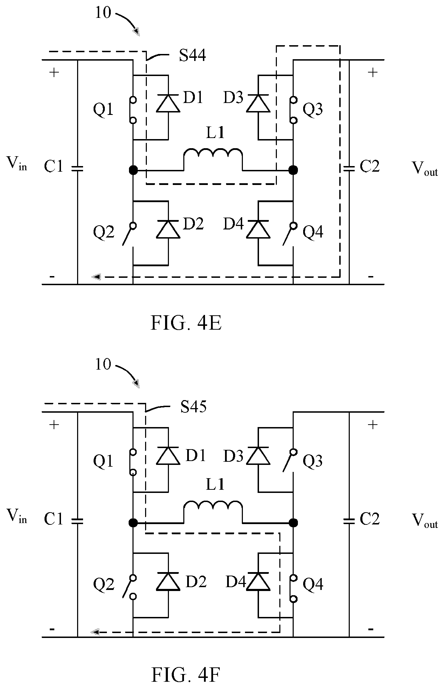

In a time segment of t3 to t4, the controller 21 may control the switch Q1 and the switch Q3 to be on, and the switch Q2 and the switch Q4 to be off. In this case, the inductor L1 is charged. The current of the power supply 200 may flow to the inductor L1 and then flow to the switch Q3, to supply power to the load 300. In this case, the buck-boost circuit 10 works in a continuous conduction mode (Continuous Conduction Mode, CCM). The CCM may mean that the inductor current never becomes 0 in one switching period, or may be understood as that the inductor never resets. That is, the inductor flux never returns to 0 in the switching period. A current path of the power supply 200 and the first inductor L1 is shown by line S44 in FIG. 4E. It may be understood that, the controller 21 may enable a turn-on time of the switch Q3 to increase in the time segment of t3 to t4 in comparison with that in the time segment of t1 to t2.

In a time segment of t4 to t5, the controller 21 may control the switch Q1 and the switch Q4 to be on, and the switch Q2 and the switch Q3 to be off. In this case, the current of the power supply 200 may charge the inductor L1. A current path of the power supply 200 and the first inductor L1 is shown by line S45 in FIG. 4F.

It may be understood that the time segment of t0 to t1 and the time segment of t1 to t2 are one switching period. The time segment of t2 to t3 and the time segment of t3 to t4 are one switching period. The time segment of t1 to t2 is after the time segment of t0 to t1, the time segment of t2 to t3 is after the time segment of t1 to t2, the time segment of t3 to t4 is after the time segment of t2 to t3, and the time segment of t4 to t5 is after the time segment of t3 to t4.

It can be learned from FIG. 4A to FIG. 4F that, when an input voltage of the voltage input end Vᵢₙ is less than an output voltage of the voltage output end Vₒᵤₜ and the load current is greater than or equal to a current threshold, the controller 21 controls the switch Q1 to be on and the switch Q2 to be off, and controls the switch Q4 to be on in a first time segment of one switching period and to be off in a second time segment. The controller 21 further enables the turn-on time of the switch Q3 in one or more switching periods to increase.

Based on the voltage converter 100 shown in embodiments of FIG. 4A to FIG. 4F, when the voltage converter 100 is in a boost mode and is in a heavy-load mode (that is, in the case of large load), the controller 21 implements smooth switching from the DCM to the CCM by enabling the turn-on time of the switch Q3 in the one or more switching periods to increase, to avoid generation of a current oscillation in a switching process. This ensures reliability of a voltage converter.

Therefore, when the input voltage of the voltage input end Vᵢₙ is less than the output voltage of the voltage output end Vₒᵤₜ and the load current is less than the current threshold, the controller 21 may control the switch Q1 to be on and the switch Q2 to be off, and control the switch Q4 to be on in the first time segment of one switching period and to be off in the second time segment. The controller 21 further enables the turn-on time of the switch Q3 in the one or more switching periods to decrease.

According to the foregoing embodiments, when the voltage converter 100 is in the boost mode and is in a light-load mode (that is, in the case of small load), that is, when a load current changes from high to low, the controller 21 may implement smooth switching from the CCM to the DCM by enabling the turn-on time of the switch Q3 in the one or more switching periods to decrease, to avoid generation of a current oscillation in a switching process. This can ensure reliability of the voltage converter.

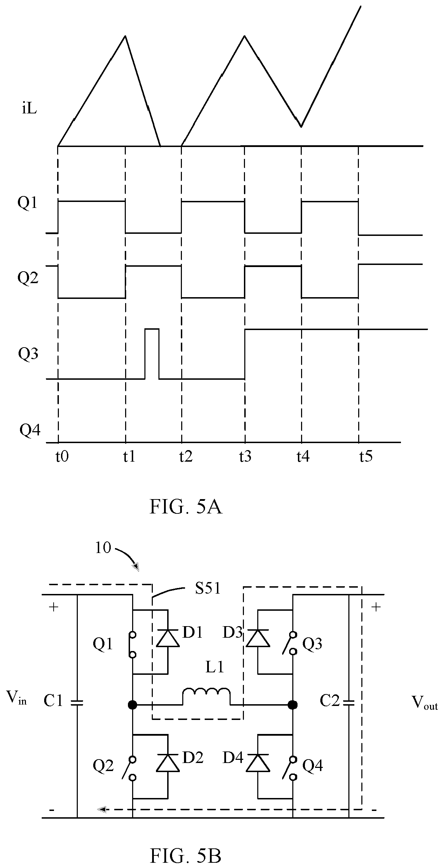

FIG. 5A is a diagram of switch timing in which a voltage converter 100 works in a buck mode and a load current changes from low to high. Timing control of the switches Q1 to Q4 may be implemented with reference to Table 2.

**Table 2**

| Time segment | Switch Q1 | Switch Q2 | Switch Q3 | Switch Q4 |
|---|---|---|---|---|
| t0-t1 | On | Off | Off | Off |
| t1-t2 | Off | On | Sometimes on | Off |
| t2-t3 | On | Off | Off | Off |
| t3-t4 | Off | On | On | Off |
| t4-t5 | On | Off | On | Off |

In a time segment of t0 to t1, the controller 21 may control the switch Q1 to be on, and the switch Q2, the switch Q3, and the switch Q4 to be off. In this case, a current of the power supply 200 may charge the inductor L 1, and the current of the power supply 200 may supply power to the load 300 after passing through the inductor L 1 and a parasitic diode of the switch Q3. A current path of the power supply 200 and the first inductor L1 is shown by line S51 in FIG. 5B.

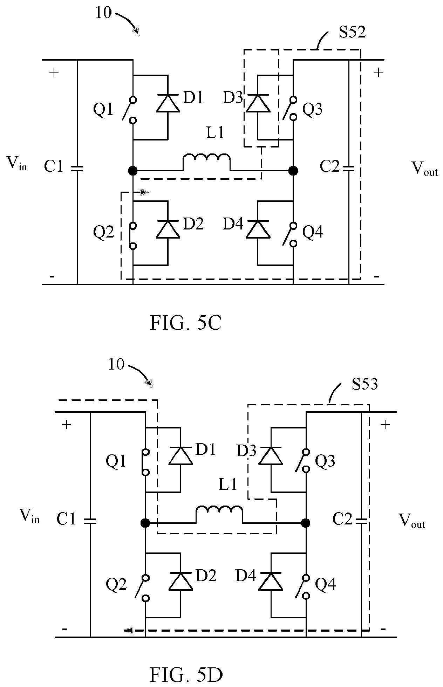

In a time segment of t1 to t2, the controller 21 may control the switch Q1 and the switch Q4 to be off, the switch Q2 to be on, and the switch Q3 to be sometimes on. In this case, the inductor L1 discharges, a part of a current of the inductor L1 flows to the switch Q3, and the other part of the current flows to a parasitic diode D3 of the switch Q3, to supply power to the load 300. In this case, the buck-boost circuit 10 may work in a DCM. A current path of the first inductor L1 is shown by line S52 in FIG. 5C.

In a time segment of t2 to t3, the controller 21 may control the switch Q1 to be on, and the switch Q2, the switch Q3, and the switch Q4 to be off. In this case, the current of the power supply 200 may charge the inductor L1, and the current of the power supply 200 may supply power to the load 300 after passing through the inductor L1 and the parasitic diode of the switch Q3. A current path of the power supply 200 and the first inductor L1 is shown by line S53 in FIG. 5D.

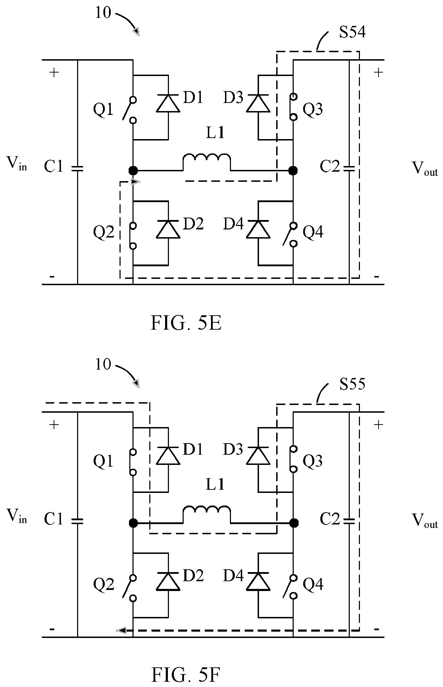

In a time segment of t3 to t4, the controller 21 may control the switch Q1 and the switch Q4 to be off, the switch Q2 and the switch Q3 to be on. In this case, the inductor L1 discharges, and a current of the inductor L 1 supplies power to the load 300 after passing through the switch Q3. In this case, the buck-boost circuit 10 works in a CCM. A current path of the first inductor L1 is shown by line S54 in FIG. 5E. It may be understood that, the controller 21 may enable a turn-on time of the switch Q3 to increase in the time segment of t3 to t4 in comparison with that in the time segment of t1 to t2.

In a time segment of t4 to t5, the controller 21 may control the switch Q1 and the switch Q3 to be on, and the switch Q2 and the switch Q4 to be off. In this case, the current of the power supply 200 may charge the inductor L1, and the current of the power supply 200 may supply power to the load after passing through the inductor L1 and the switch Q3. A current path of the power supply 200 and the first inductor L1 is shown by line S55 in FIG. 5F.

It may be understood that the time segment of t0 to t1 and the time segment of t1 to t2 are one switching period. The time segment of t2 to t3 and the time segment of t3 to t4 are one switching period. The time segment of t1 to t2 is after the time segment of t0 to t1, the time segment of t2 to t3 is after the time segment of t1 to t2, the time segment of t3 to t4 is after the time segment of t2 to t3, and the time segment of t4 to t5 is after the time segment of t3 to t4.

It can be learned from FIG. 5A to FIG. 5F that, when an input voltage of the voltage input end Vᵢₙ is greater than an output voltage of the voltage output end Vₒᵤₜ and the load current is greater than or equal to a current threshold, the controller 21 controls either of the switch Q1 and the switch Q2 to be on, and the switch Q4 to be off. The controller 21 further enables the turn-on time of the switch Q3 in the one or more switching periods to increase.

Based on the voltage converter 100 shown in embodiments of FIG. 5A to FIG. 5F, when the voltage converter 100 is in a buck mode and is in a heavy-load mode (that is, in the case of large load), the controller 21 may implement smooth switching from the DCM to the CCM by enabling the turn-on time of the switch Q3 in the one or more switching periods to increase, to avoid generation of a current oscillation in a switching process. This ensures reliability of a voltage converter.

It may be understood that, when the input voltage of the voltage input end Vᵢₙ is greater than the output voltage of the voltage output end Vₒᵤₜ and the load current is less than the current threshold, the controller 21 may control either of the switch Q1 and the switch Q2 to be on, and the switch Q4 to be off. The controller 21 further enables the turn-on time of the switch Q3 in the one or more switching periods to decrease.

According to the foregoing embodiments, when the voltage converter 100 is in the buck mode and is in a light-load mode (that is, in the case of small load), the controller 21 may implement smooth switching from the CCM to the DCM by enabling the turn-on time of the switch Q3 in the one or more switching periods to decrease, to avoid generation of a current oscillation in a switching process. This can ensure reliability of the voltage converter.

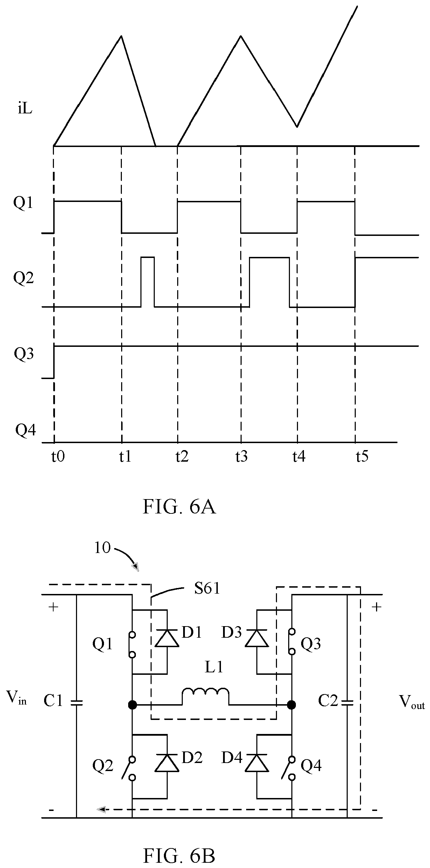

FIG. 6A is another diagram of switch timing in which a voltage converter 100 works in a buck mode and a load current changes from low to high.

Timing control of the switches Q1 to Q4 may be implemented with reference to Table 3.

**Table 3**

| Time segment | Switch Q1 | Switch Q2 | Switch Q3 | Switch Q4 |
|---|---|---|---|---|
| t0-t1 | On | Off | On | Off |
| t1-t2 | Off | Sometimes on | On | Off |
| t2-t3 | On | Off | On | Off |
| t3-t4 | Off | On | On | Off |
| t4-t5 | On | Off | On | Off |

In a time segment of t0 to t1, the controller 21 may control the switch Q1 and the switch Q3 to be on, and the switch Q2 and the switch Q4 to be off. In this case, a current of the power supply 200 may charge the inductor L 1, and the current of the power supply 200 may supply power to the load 300 after passing through the inductor L 1 and the switch Q3. A current path of the power supply 200 and the first inductor L 1 is shown by line S61 in FIG. 6B.

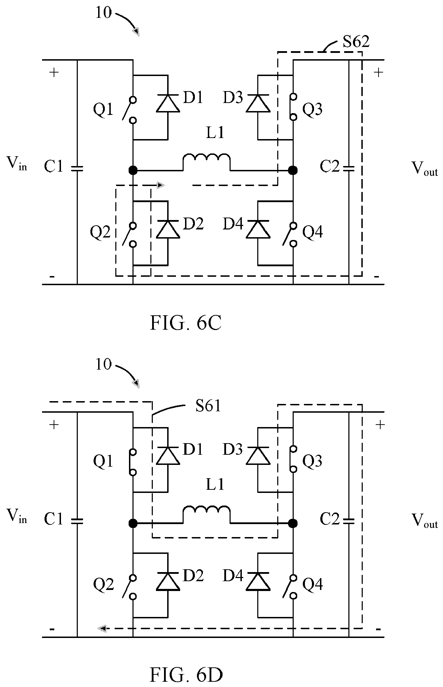

In a time segment of t1 to t2, the controller 21 may control the switch Q1 and the switch Q4 to be off, the switch Q2 to be sometimes on, and the switch Q3 to be on. In this case, the inductor L 1 discharges. A current of the inductor L 1 supplies power to the load 300 after passing through the switch Q3, and returns to the inductor L 1 after passing through a parasitic diode D2 of the switch Q2. In this case, the buck-boost circuit 10 may work in a DCM. A current path of the first inductor L 1 is shown by line S62 in FIG. 6C.

In a time segment of t2 to t3, the controller 21 may control the switch Q1 and the switch Q3 to be on, and the switch Q2 and the switch Q4 to be off. In this case, the current of the power supply 200 may charge the inductor L 1, and may supply power to the load 300 after passing through the inductor L 1 and the switch Q3. A current path of the power supply 200 and the first inductor L 1 is shown by line S63 in FIG. 6D.

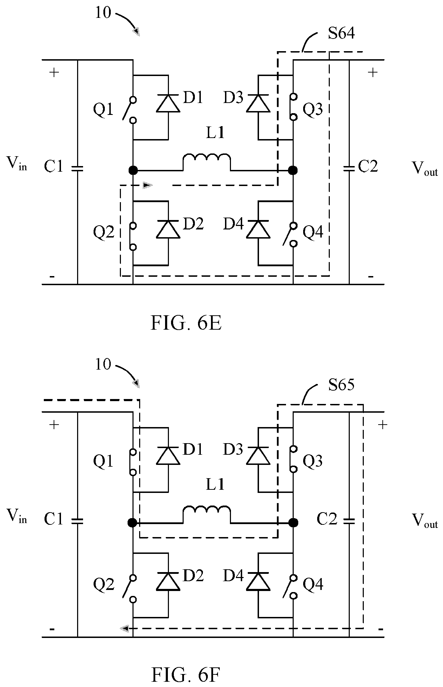

In a time segment of t3 to t4, the controller 21 may control the switch Q1 and the switch Q4 to be off, and the switch Q2 and the switch Q3 to be on. In this case, the inductor L 1 discharges. The current of the inductor L 1 supplies power to the load 300 after passing through the switch Q3, and returns to the inductor L 1 after passing through the switch Q2. In this case, the buck-boost circuit 10 works in a CCM. A current path of the first inductor L 1 is shown by line S64 in FIG. 6E. It may be understood that, the controller 21 may enable a turn-on time of the switch Q2 to increase in the time segment of t3 to t4 in comparison with that in the time segment of t1 to t2.

In a time segment of t4 to t5, the controller 21 may control the switch Q1 and the switch Q3 to be on, and the switch Q2 and the switch Q4 to be off. In this case, the current of the power supply 200 may charge the inductor L 1, and may supply power to the load 300 after passing through the inductor L 1 and the switch Q3. A current path of the power supply 200 and the first inductor L 1 is shown by line S65 in FIG. 6F.

It may be understood that the time segment of t0 to t1 and the time segment of t1 to t2 are one switching period. The time segment of t2 to t3 and the time segment of t3 to t4 are one switching period. The time segment of t1 to t2 is after the time segment of t0 to t1, the time segment of t2 to t3 is after the time segment of t1 to t2, the time segment of t3 to t4 is after the time segment of t2 to t3, and the time segment of t4 to t5 is after the time segment of t3 to t4.

It can be learned from FIG. 6A to FIG. 6F that, when an input voltage of the voltage input end Vᵢₙ is greater than an output voltage of the voltage output end Vₒᵤₜ and the load current is greater than or equal to a current threshold, the controller 21 controls the switch Q3 to be on, controls the switch Q4 to be off, and controls the switch Q1 to be on in a first time segment of a switching period and to be off in a second time segment. The controller 21 may further enable a turn-on time of the switch Q2 in the one or more switching periods to increase.

Based on the voltage converter 100 shown in embodiments of FIG. 6A to FIG. 6F, when the voltage converter 100 is in the buck mode and is in a heavy-load mode (that is, in the case of large load), the controller 21 may implement smooth switching from the DCM to the CCM by enabling the turn-on time of the switch Q2 in the one or more switching periods to increase, to avoid generation of a current oscillation in a switching process. This ensures reliability of a voltage converter.

Therefore, when the input voltage of the voltage input end Vᵢₙ is greater than the output voltage of the voltage output end Vₒᵤₜ and the load current is less than the current threshold, the controller 21 may control the switch Q3 to be on and the switch Q4 to be off, and control the switch Q1 to be on in the first time segment of the switching period and to be off in the second time segment. The controller 21 may further enable the turn-on time of the switch Q2 in the one or more switching periods to decrease.

According to the foregoing embodiments, when the voltage converter 100 is in the buck mode and is in a light-load mode (that is, in the case of small load), the controller 21 may implement smooth switching from the CCM to the DCM by enabling the turn-on time of the switch Q2 in the one or more switching periods to decrease, to avoid generation of a current oscillation in a switching process. This can ensure reliability of the voltage converter.

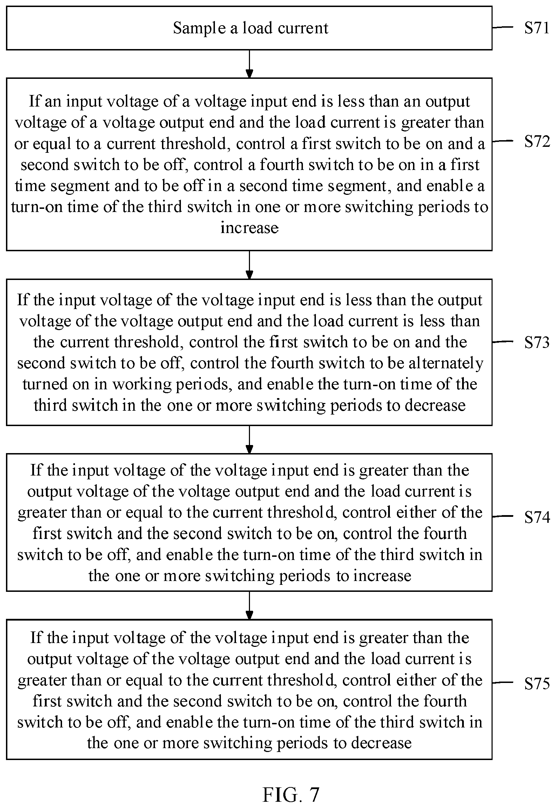

FIG. 7 is a flowchart of a voltage converter control method according to an embodiment of this application. The control method may be applicable to the voltage converter 100, and the control method includes the following steps.

Step S71: Sample a load current.

The voltage converter 100 shown in FIG. 3 is used as an example for description.

It may be understood that the sampling circuit 22 may be electrically connected to an output end of the buck-boost circuit 10. In this way, the sampling circuit 22 may sample the load current and transmit the sampled load current to the controller 21. The controller 21 may control a status of a switch in the buck-boost circuit 10 based on the sampled current.

Step S72: If an input voltage of the voltage input end is less than an output voltage of the voltage output end and the load current is greater than or equal to a current threshold, control a first switch to be on and a second switch to be off, control a fourth switch to be on in a first time segment and to be off in a second time segment, and enable a turn-on time of a third switch in the one or more switching periods to increase.

The following describes, with reference to FIG. 4A to FIG. 4F, the control method when the input voltage of the voltage input end is less than the output voltage of the voltage output end and the load current is greater than or equal to a current threshold.

As shown in FIG. 4A, in the time segment of t0 to t1, the controller 21 may control the switch Q1 and the switch Q4 to be on, and the switch Q2 and the switch Q3 to be off. In this case, the current of the power supply 200 may charge the inductor L1. The current path of the power supply 200 and the first inductor L1 is shown by line S41 in FIG. 4B.

As shown in FIG. 4A, in the time segment of t1 to t2, the controller 21 may control the switch Q1 to be on, the switch Q3 to be sometimes on, and the switch Q2 and the switch Q4 to be off. In this case, the inductor L1 is charged. After the current of the power supply 200 may flow to the inductor L1, the part of the current flows to the switch Q3, and the other part of the current flows to the parasitic diode of the switch Q3, to supply power to the load 300. In this case, the buck-boost circuit 10 may work in the DCM. The current path of the power supply 200 and the first inductor L1 is shown by line S42 in FIG. 4C.

As shown in FIG. 4A, in the time segment of t2 to t3, the controller 21 may control the switch Q1 and the switch Q4 to be on, and the switch Q2 and the switch Q3 to be off. In this case, the current of the power supply 200 may charge the inductor L1. The current path of the power supply 200 and the first inductor L1 is shown by line S43 in FIG. 4D.

As shown in FIG. 4A, in the time segment of t3 to t4, the controller 21 may control the switch Q1 and the switch Q3 to be on, and the switch Q2 and the switch Q4 to be off. In this case, the inductor L1 is charged. The current of the power supply 200 may flow to the inductor L1 and then flow to the switch Q3, to supply power to the load 300. In this case, the buck-boost circuit 10 works in the CCM. The current path of the power supply 200 and the first inductor L1 is shown by line S44 in FIG. 4E. It may be understood that, the controller 21 may enable the turn-on time of the switch Q3 to increase in the time segment of t3 to t4 in comparison with that in the time segment of t1 to t2.

As shown in FIG. 4A, in the time segment of t4 to t5, the controller 21 may control the switch Q1 and the switch Q4 to be on, and the switch Q2 and the switch Q3 to be off. In this case, the current of the power supply 200 may charge the inductor L1. The current path of the power supply 200 and the first inductor L1 is shown by line S45 in FIG. 4F.

It can be learned from FIG. 4A to FIG. 4F that, when the input voltage of the voltage input end Vᵢₙ is less than the output voltage of the voltage output end Vₒᵤₜ and the load current is greater than or equal to the current threshold, the controller 21 controls the switch Q1 to be on and the switch Q2 to be off, and controls the switch Q4 to be on in the first time segment of the switching period and to be off in the second time segment. The controller 21 further enables the turn-on time of the switch Q3 in the one or more switching periods to increase. Based on the voltage converter 100 shown in embodiments of FIG. 4A to FIG. 4F, when the voltage converter 100 is in the boost mode and is in the heavy-load mode (that is, in the case of large load), the controller 21 implements smooth switching from the DCM to the CCM by enabling the turn-on time of the switch Q3 in the one or more switching periods to increase, to avoid generation of a current oscillation in a switching process. This ensures reliability of the voltage converter.

Step S73: If the input voltage of the voltage input end is less than the output voltage of the voltage output end and the load current is less than the current threshold, control the first switch to be on and the second switch to be off, control the fourth switch to be alternately turned on in each working period, and enable the turn-on time of the third switch in the one or more switching periods to decrease.

Step S74: If the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase.

The following describes, with reference to FIG. 5A to FIG. 5F, the control method when the input voltage of the voltage input end is greater than the output voltage of the voltage output end and the load current is greater than or equal to the current threshold.

As shown in FIG. 5A, in the time segment of t0 to t1, the controller 21 may control the switch Q1 to be on, and the switch Q2, the switch Q3, and the switch Q4 to be off. In this case, the current of the power supply 200 may charge the inductor L1, and the current of the power supply 200 may supply power to the load 300 after passing through the inductor L1 and the parasitic diode of the switch Q3. The current path of the power supply 200 and the first inductor L1 is shown by line S51 in FIG. 5B.

As shown in FIG. 5A, in the time segment of t1 to t2, the controller 21 may control the switch Q1 and the switch Q4 to be off, the switch Q2 to be on, and the switch Q3 to be sometimes on. In this case, the inductor L1 discharges, a part of the current of the inductor L1 flows to the switch Q3, and the other part of the current flows to the parasitic diode of the switch Q3, to supply power to the load 300. In this case, the buck-boost circuit 10 may work in the DCM. The current path of the first inductor L1 is shown by line S52 in FIG. 5C.

As shown in FIG. 5A, in the time segment of t2 to t3, the controller 21 may control the switch Q1 to be on, and the switch Q2, the switch Q3, and the switch Q4 to be off. In this case, the current of the power supply 200 may charge the inductor L1, and the current of the power supply 200 may supply power to the load 300 after passing through the inductor L1 and the parasitic diode of the switch Q3. The current path of the power supply 200 and the first inductor L1 is shown by line S53 in FIG. 5D.

As shown in FIG. 5A, in the time segment of t3 to t4, the controller 21 may control the switch Q1 and the switch Q4 to be off, and the switch Q2 and the switch Q3 to be on. In this case, the inductor L1 discharges, and the current of the inductor L1 supplies power to the load 300 after passing through the switch Q3. In this case, the buck-boost circuit 10 works in the CCM. The current path of the first inductor L1 is shown by line S54 in FIG. 5E. It may be understood that, the controller 21 may enable the turn-on time of the switch Q3 to increase in the time segment of t3 to t4 in comparison with that in the time segment of t1 to t2.

As shown in FIG. 5A, in the time segment of t4 to t5, the controller 21 may control the switch Q1 and the switch Q3 to be on, and the switch Q2 and the switch Q4 to be off. In this case, the current of the power supply 200 may charge the inductor L1, and the current of the power supply 200 may supply power to the load after passing through the inductor L1 and the switch Q3. The current path of the power supply 200 and the first inductor L1 is shown by line S55 in FIG. 5F.

It can be learned from FIG. 5A to FIG. 5F that, when the input voltage of the voltage input end Vᵢₙ is greater than the output voltage of the voltage output end Vₒᵤₜ and the load current is greater than or equal to the current threshold, the controller 21 controls either of the switch Q1 and the switch Q2 to be on, and the switch Q4 to be off. The controller 21 further enables the turn-on time of the switch Q3 in the one or more switching periods to increase. Based on the voltage converter 100 shown in embodiments of FIG. 5A to FIG. 5F, when the voltage converter 100 is in the buck mode and is in the heavy-load mode (that is, in the case of large load), the controller 21 may implement smooth switching from the DCM to the CCM by enabling the turn-on time of the switch Q3 in the one or more switching periods to increase, to avoid generation of a current oscillation in a switching process. This ensures reliability of the voltage converter.

In another possible implementation, when an input voltage of the voltage input end is greater than an output voltage of the voltage output end and the load current is greater than or equal to the current threshold, the control method may alternatively be: controlling the first switch to be on in a first time segment and to be off in a second time segment, controlling the third switch to be on and the fourth switch to be off, and enabling a turn-on time of the second switch in the one or more switching periods to increase.

The following describes, with reference to FIG. 6A to FIG. 6F, the control method when the input voltage of the voltage input end is greater than the output voltage of the voltage output end and the load current is greater than or equal to the current threshold.

As shown in FIG. 6A, in the time segment of t0 to t1, the controller 21 may control the switch Q1 and the switch Q3 to be on, and the switch Q2 and the switch Q4 to be off. In this case, the current of the power supply 200 may charge the inductor L 1, and may supply power to the load 300 after passing through the inductor L 1 and the switch Q3. The current path of the power supply 200 and the first inductor L 1 is shown by line S61 in FIG. 6B.

As shown in FIG. 6A, in the time segment of t1 to t2, the controller 21 may control the switch Q1 and the switch Q4 to be off, the switch Q2 to be sometimes on, and the switch Q3 to be on. In this case, the inductor L 1 discharges. The current of the inductor L1 supplies power to the load 300 after passing through the switch Q3, and returns to the inductor L 1 after passing through the parasitic diode of the switch Q2. In this case, the buck-boost circuit 10 may work in the DCM. The current path of the first inductor L 1 is shown by line S62 in FIG. 6C.

As shown in FIG. 6A, in the time segment of t2 to t3, the controller 21 may control the switch Q1 and the switch Q3 to be on, and the switch Q2 and the switch Q4 to be off. In this case, the current of the power supply 200 may charge the inductor L 1, and may supply power to the load 300 after passing through the inductor L 1 and the switch Q3. The current path of the power supply 200 and the first inductor L 1 is shown by line S63 in FIG. 6D.

As shown in FIG. 6A, in the time segment of t3 to t4, the controller 21 may control the switch Q1 and the switch Q4 to be off, and the switch Q2 and the switch Q3 to be on. In this case, the inductor L 1 discharges. The current of the inductor L 1 supplies power to the load 300 after passing through the switch Q3, and returns to the inductor L 1 after passing through the switch Q2. In this case, the buck-boost circuit 10 works in the CCM. The current path of the first inductor L 1 is shown by line S64 in FIG. 6E. It may be understood that, the controller 21 may enable the turn-on time of the switch Q2 to increase in the time segment of t3 to t4 in comparison with that in the time segment of t1 to t2.

As shown in FIG. 6A, in the time segment of t4 to t5, the controller 21 may control the switch Q1 and the switch Q3 to be on, and the switch Q2 and the switch Q4 to be off. In this case, the current of the power supply 200 may charge the inductor L 1, and may supply power to the load 300 after passing through the inductor L 1 and the switch Q3. The current path of the power supply 200 and the first inductor L 1 is shown by line S65 in FIG. 6F.

It can be learned from FIG. 6A to FIG. 6F that, when the input voltage of the voltage input end Vᵢₙ is greater than the output voltage of the voltage output end Vₒᵤₜ and the load current is greater than or equal to the current threshold, in the another possible implementation, the controller 21 may control the switch Q3 to be on, control the switch Q4 to be off, and control the switch Q1 to be on in the first time segment of one switching period and to be off in the second time segment. The controller 21 may further enable the turn-on time of the switch Q2 in the one or more switching periods to increase.

Step S75: If the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to decrease.

It may be understood that, in another possible implementation, when an input voltage of a voltage input end is greater than an output voltage of a voltage output end and a load current is greater than or equal to a current threshold, a control method may alternatively be: controlling the first switch to be on in a first time segment and to be off in a second time segment, controlling the third switch to be on and the fourth switch to be off, and enabling a turn-on time of the third switch in the one or more switching periods to decrease.

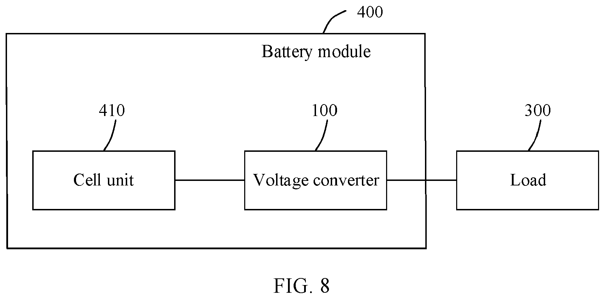

It may be understood that, as shown in FIG. 8, an embodiment of this application provides a battery module 400. The battery module 400 may include the voltage converter 100 and the cell unit 410 described in the foregoing embodiments. It may be understood that the battery module 400 in this embodiment may be an intelligent lithium battery module with a voltage boosting or a voltage bucking function.

As shown in FIG. 8, in an application scenario, the battery module 400 may be electrically connected to a load 300, and the battery module 400 may supply power to the load 300. For example, the battery module 400 may supply power to a load such as a notebook computer, a mobile phone, a camera, or a tablet computer. The cell unit 410 may be electrically connected to the voltage converter 100. The cell unit 410 may output a first voltage to the voltage converter 100 and the voltage converter 100 may convert the first voltage of the cell unit 410 into a second voltage. For example, the voltage converter 100 may perform voltage bucking on the first voltage, to convert the first voltage into the second voltage to supply power to the load 300.

It may be understood that, in another application scenario, the battery module 400 may alternatively be electrically connected to a charger. That is, the charger may be electrically connected to the battery module 400. In this way, the charger may charge the battery module 400. For example, the charger may output a first voltage to the voltage converter 100, and the voltage converter 100 may perform voltage boosting on the first voltage, to output a second voltage to charge the cell unit 410.

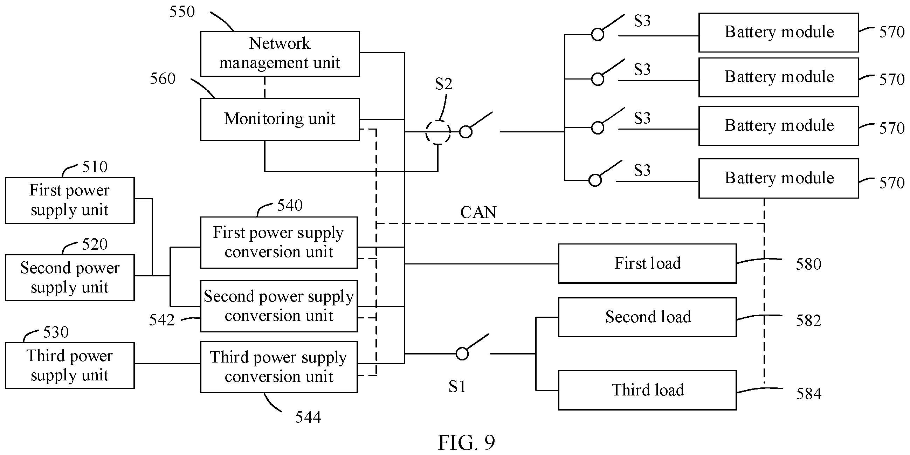

FIG. 9 is a diagram of an application scenario in which the battery module 400 in the foregoing embodiments is applied to a communication base station power supply device 500.

The communication base station power supply device 500 may include a first power supply unit 510, a second power supply unit 520, a third power supply unit 530, a first power supply conversion unit 540, a second power supply conversion unit 542, a third power supply conversion unit 544, a network management unit 550, a monitoring unit 560, a plurality of battery modules 570, a first load 580, a second load 582, and a third load 584.

The first power supply unit 510 and the second power supply unit 520 are electrically connected to the first power supply conversion unit 540 and the second power supply conversion unit 542, and the third power supply unit 530 is electrically connected to the third power supply conversion unit 544. The first power supply unit 510 may be a diesel generator power supply unit, and the second power supply unit 520 may be an alternating current power supply unit. The first power supply unit 510 and the second power supply unit 520 may be configured to supply power to the first power supply conversion unit 540 and the second power supply conversion unit 542. The third power supply unit 530 may be a photovoltaic power supply unit, and the third power supply unit 530 may be configured to supply power to the third power supply conversion unit 544.

In this embodiment, the first power supply conversion unit 540, the second power supply conversion unit 542, and the third power supply conversion unit 544 may all be electrically connected to the first load 580. The first power supply conversion unit 540, the second power supply conversion unit 542, and the third power supply conversion unit 544 may be further electrically connected to the second load 582 and the third load 584 by using a switch S1, and are configured to supply power to the second load 582 and the third load 584. The first load 580 may be a BLVD load, and the second load may be a 5G load, for example, a base station device. The third load 584 may be any one of a 2G load, a 3G load, or a 4G load, for example, a base station device.

The monitoring unit 560 may be connected to the plurality of battery modules 570, the first power supply conversion unit 540, the second power supply conversion unit 542, and the third power supply conversion unit 544 by using a CAN bus. The monitoring unit 560 may obtain statuses of the first power supply conversion unit 540, the second power supply conversion unit 542, and the third power supply conversion unit 544, and feed back an obtained status of a related power supply unit or a battery module to the network management unit 550.

The monitoring unit 560 may be further connected to the plurality of battery modules 400 by using a switch S2. When the monitoring unit 560 obtains, through monitoring, that the first power supply conversion unit 540, the second power supply conversion unit 542, and the third power supply conversion unit 544 are powered off, the monitoring unit 560 controls the switch S2 to be on, and the plurality of battery modules 400 may be used as backup power supplies. In this way, the plurality of battery modules 400 may supply power to the first load 580, the second load 582, and the third load 584. The application scenario shown in FIG. 9 shows only four battery modules 400 as an example for description, and each battery module may be electrically connected to the switch S2 by using a switch S3. Therefore, the quantity of battery modules connected to the power supply device 500 of the communication base station may be controlled by controlling a status of the switch S3. The switch S3 may be a button switch.

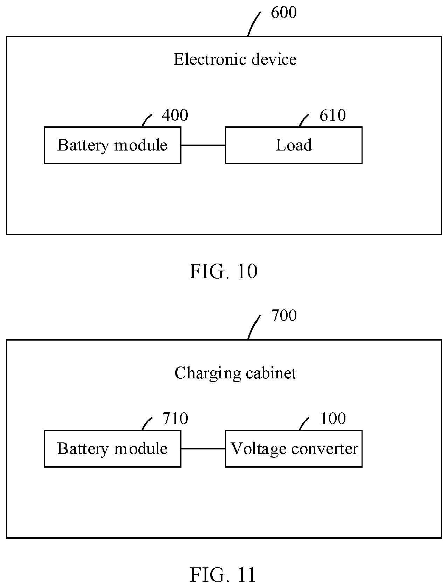

With reference to FIG. 10, an embodiment of this application provides an electronic device 600. The electronic device 600 may include the battery module 40 described in the foregoing embodiments.

It may be understood that, in some other embodiments, the electronic device 600 may also include the voltage converter 100 described in the foregoing embodiments.

In some embodiments, the electronic device 600 may be an electric device such as an electric vehicle and a communication power supply. The electronic device 600 may alternatively be a photovoltaic power station. The battery module provided in this embodiment of this application may be applied to the electronic device 600. For example, as shown in FIG. 10, the electronic device 600 may include a battery module 400 and a load 610. The battery module 400 is configured to receive an input voltage, and provide an output voltage to supply power to the load 610. The load 610 of the electronic device 600 may include one or more of an electric apparatus, an energy storage apparatus, or an external device. In an embodiment, the load 610 may be an electric apparatus of the electronic device 600.

With reference to FIG. 11, an embodiment of this application provides a charging cabinet 700. The charging cabinet 700 may include the voltage converter 100 described in the foregoing embodiments and a power module 710. The power module 710 may be configured to supply power to the voltage converter 100.

The foregoing descriptions are merely examples of implementations of this application, but are not intended to limit this application in any form. Although this application is disclosed as examples of implementations described above, the examples of implementations are not intended to limit this application. Any person skilled in the art may make, without departing from the scope of the technical solutions of this application, some changes or modify the technical content disclosed above into embodiments with equal effects through equivalent variations. Any simple amendment, equivalent variation, or modification made to the foregoing implementations according to the technical essence of this application shall fall within the scope of the technical solutions of this application.

## Claims

1. A voltage converter, configured to supply power to a load, and comprising a buck-boost circuit and a sampling control circuit, wherein
the buck-boost circuit comprises a voltage input end, a voltage output end, a first switch, a second switch, a third switch, and a fourth switch, wherein an input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end;
the sampling control circuit is configured to sample a load current; and
the sampling control circuit is further configured to:
when an input voltage of the voltage input end is less than an output voltage of the voltage output end and the load current is greater than or equal to a current threshold, control the first switch to be on and the second switch to be off, control the fourth switch to be on in a first time segment and to be off in a second time segment, and enable a turn-on time of the third switch in one or more switching periods to increase; or
when the input voltage of the voltage input end is less than the output voltage of the voltage output end and the load current is less than the current threshold, control the first switch to be on and the second switch to be off, control the fourth switch to be on in the first time segment and to be off in the second time segment, and enable the turn-on time of the third switch in the one or more switching periods to decrease.

2. The voltage converter according to claim 1, wherein the sampling control circuit is further configured to:
when the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase.

3. The voltage converter according to claim 1 or 2, wherein the sampling control circuit is further configured to:
when the input voltage of the voltage input end is greater than the output voltage of the voltage output end and the load current is less than the current threshold, control either of the first switch and the second switch to be on, control the fourth switch to be off, and enable the turn-on time of the third switch in the one or more switching periods to decrease.

4. The voltage converter according to claim 1, wherein the sampling control circuit is further configured to:
when the input voltage of the voltage input end is greater than the output voltage of the voltage output end and the load current is greater than or equal to the current threshold, control the first switch to be on in the first time segment and to be off in the second time segment, control the third switch to be on and the fourth switch to be off, and enable a turn-on time of the second switch in the one or more switching periods to increase.

5. The voltage converter according to claim 1 or 4, wherein the sampling control circuit is further configured to:
when the input voltage of the voltage input end is greater than the output voltage of the voltage output end and the load current is less than the current threshold, control the first switch to be on in the first time segment and to be off in the second time segment, control the third switch to be on and the fourth switch to be off, and enable the turn-on time of the second switch in the one or more switching periods to decrease.

6. A voltage converter control method, wherein the control method is applicable to a voltage converter, the voltage converter comprises a buck-boost circuit and a sampling control circuit, and the buck-boost circuit comprises a voltage input end, a voltage output end, a first switch, a second switch, a third switch, and a fourth switch, wherein an input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end; and the control method comprises:
sampling a load current; and
when an input voltage of the voltage input end is less than an output voltage of the voltage output end and the load current is greater than or equal to a current threshold, control the first switch to be on and the second switch to be off, control the fourth switch to be on in a first time segment and to be off in a second time segment, and enable a turn-on time of the third switch in one or more switching periods to increase; or
when the input voltage of the voltage input end is less than the output voltage of the voltage output end and the load current is less than the current threshold, control the first switch to be on and the second switch to be off, control the fourth switch to be alternately turned on in each working period, and enable the turn-on time of the third switch in the one or more switching periods to decrease.

7. The control method according to claim 6, wherein the method further comprises:
when the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase.

8. The control method according to claim 6 or 7, wherein the method further comprises:
when the input voltage of the voltage input end is greater than the output voltage of the voltage output end and the load current is less than the current threshold, control either of the first switch and the second switch to be on, control the fourth switch to be off, and enable the turn-on time of the third switch in the one or more switching periods to decrease.

9. A battery module, wherein the battery module comprises a cell unit and a voltage converter;
the cell unit is configured to supply power to the voltage converter;
the voltage converter comprises a buck-boost circuit and a sampling control circuit;
the buck-boost circuit comprises a voltage input end, a voltage output end, a first switch, a second switch, a third switch, and a fourth switch, wherein an input end of the first switch is connected to a positive electrode of the voltage input end, an output end of the second switch is connected to a negative electrode of the voltage input end, an input end of the third switch is connected to a positive electrode of the voltage output end, and an output end of the fourth switch is connected to a negative electrode of the voltage output end;
the sampling control circuit is configured to sample a load current; and
the sampling control circuit is further configured to:
when an input voltage of the voltage input end is less than an output voltage of the voltage output end and the load current is greater than or equal to a current threshold, control the first switch to be on and the second switch to be off, control the fourth switch to be on in a first time segment and to be off in a second time segment, and enable a turn-on time of the third switch in one or more switching periods to increase; or
when the input voltage of the voltage input end is less than the output voltage of the voltage output end and the load current is less than the current threshold, control the first switch to be on and the second switch to be off, control the fourth switch to be on in the first time segment and to be off in the second time segment, and enable the turn-on time of the third switch in the one or more switching periods to decrease.

10. The voltage converter according to claim 9, wherein the sampling control circuit is further configured to:
when the input voltage of the voltage input end is greater than the output voltage of the voltage output end and the load current is greater than or equal to the current threshold, control either of the first switch and the second switch to be on, control the fourth switch to be off, and enable the turn-on time of the third switch in the one or more switching periods to increase.

11. The voltage converter according to claim 9 or 10, wherein the sampling control circuit is further configured to:
when the input voltage of the voltage input end is greater than the output voltage of the voltage output end and the load current is less than the current threshold, control either of the first switch and the second switch to be on, control the fourth switch to be off, and enable the turn-on time of the third switch in the one or more switching periods to decrease.

12. An electronic device, comprising the battery module according to any one of claims 9 to 11 or the voltage converter according to any one of claims 1 to 5.

13. A charging cabinet, wherein the charging cabinet comprises a power module and the voltage converter according to any one of claims 1 to 5, and the power module is configured to supply power to the voltage converter.
